(19) **Europäisches Patentamt / European Patent Office / Office européen des brevets**

(11) **EP 3 942 165 B1**

(12) **FASCICULE DE BREVET EUROPEEN**

(45) Date de publication et mention de la délivrance du brevet:
**08.11.2023   Bulletin 2023/45**

(21) Numéro de dépôt: **20712557.6**

(22) Date de dépôt: **19.03.2020**

(51) Classification Internationale des Brevets (IPC):
**F01N 3/20** *(2006.01)*       **F01N 3/027** *(2006.01)*

(52) Classification Coopérative des Brevets (CPC):
**F01N 3/2013; F01N 3/027;** F01N 2240/16;
F01N 2240/20; Y02A 50/20; Y02T 10/12

(86) Numéro de dépôt international:
**PCT/EP2020/057556**

(87) Numéro de publication internationale:
**WO 2020/188016 (24.09.2020 Gazette 2020/39)**

(54) **ORGANE DE CHAUFFAGE DURABLE POUR DISPOSITIF DE PURIFICATION DES GAZ D'ÉCHAPPEMENT D'UN VÉHICULE**

**BESTÄNDIGES HEIZELEMENT FÜR EINE ABGASREINIGUNGSVORRICHTUNG EINES FAHRZEUGS**

**DURABLE HEATING MEMBER FOR A VEHICLE EXHAUST GAS PURIFYING DEVICE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **21.03.2019  FR 1902950**

(43) Date de publication de la demande:
**26.01.2022   Bulletin 2022/04**

(73) Titulaire: **Faurecia Systèmes d'Echappement 92000 Nanterre (FR)**

(72) Inventeurs:
• **SOMMIER, Thomas 90000 Belfort (FR)**
• **RIVERAIN, Matthieu 25550 Bavans (FR)**
• **TUR, Nicolas 74200 Thonon les bains (FR)**
• **HANAUER, Sébastien 68780 Le Haut Soultzbach (FR)**
• **LEBOURGEOIS, Vincent 25400 Audincourt (FR)**

(74) Mandataire: **Lavoix 2, place d'Estienne d'Orves 75441 Paris Cedex 09 (FR)**

(56) Documents cités:
JP-A- S58 124 012       US-A1- 2011 030 554
US-A1- 2018 291 787

**Description**

La présente invention concerne un organe de chauffage pour un dispositif de purification des gaz d'échappement d'un véhicule, adapté pour être disposé en regard et à distance d'une face amont ou aval d'un organe de purification des gaz d'échappement d'un véhicule.

L'invention concerne également un organe d'alimentation de dispositif de purification des gaz d'échappement, un dispositif de purification des gaz d'échappement d'un moteur à combustion interne comprenant un tel organe de chauffage, une ligne d'échappement comprenant un tel dispositif de purification, et un véhicule automobile comprenant une telle ligne d'échappement.

Les lignes d'échappement de véhicules équipés de moteurs thermiques comportent typiquement des organes de purification catalytiques, permettant par exemple de convertir les NOx, le CO et les hydrocarbures en $N_2$, $CO_2$ et $H_2O$. De tels organes ne sont efficaces que lorsque le matériau catalytique se trouve à une température minimum.

A cet effet, il a été développé des dispositifs de purification intégrant un organe de chauffage monté en vis-à-vis de la face amont d'un organe de purification, de sorte à chauffer l'organe de purification de manière accélérée au démarrage du véhicule. FR 3 065 027 A1 décrit un tel dispositif de purification, dans lequel l'organe de chauffage est formé par une pluralité de fils chauffants entrecroisés montés entre un cadre périphérique et un support central.

Les organes de chauffage existant ne donnent toutefois pas entière satisfaction. Ils sont en effet peu durables et ont tôt fait d'être endommagés par les conditions particulièrement agressives rencontrées dans une ligne d'échappement. Ils sont également peu adaptés aux conduits à section elliptique, alors même que les contraintes d'agencement des lignes d'échappement de véhicules imposent souvent de loger les dispositifs de purification dans de tels conduits.

Ainsi, un objectif de l'invention est d'augmenter la durabilité de tels organes de chauffage. D'autres objectifs sont que de tels organes de chauffage puissent être aisément standardisés et facilement manipulés, qu'ils puissent être intégrés aisément sur tout type de dispositif de purification des gaz d'échappement existant, y compris à section elliptique, qu'ils aient un impact très limité sur l'encombrement de la ligne d'échappement, qu'ils puissent être réalisés par un procédé automatisé et qu'ils permettent un chauffage homogène et rapide du dispositif de purification.

A cet effet, l'invention a pour objet un organe de chauffage pour un dispositif de purification des gaz d'échappement d'un véhicule, adapté pour être disposé en regard et à distance d'une face amont ou aval d'un organe de purification des gaz d'échappement d'un véhicule, ledit organe de chauffage comprenant un cadre périphérique électriquement conducteur présentant un bord interne ayant un centre géométrique, un support central disposé sensiblement au centre géométrique, et une grille chauffante ajourée, centrée sur le centre géométrique et s'étend depuis le support central jusqu'au cadre périphérique, ladite grille chauffante étant formée d'une pluralité d'éléments chauffants allongés ayant chacun des première et seconde extrémités opposées l'une à l'autre, la première extrémité étant liée au cadre périphérique et la seconde extrémité étant liée au support central, chaque élément chauffant allongé occupant un secteur angulaire respectif de la grille chauffante et étant agencé en zigzag à l'intérieur de ce secteur angulaire de sorte à former une succession de brins raccordés par des noeuds et étant lié par lesdits noeuds aux éléments chauffants allongés occupant les secteurs angulaires voisins, les brins formant des anneaux concentriques centrés sur le centre géométrique G.

Selon des modes de réalisation particuliers de l'invention, l'organe de chauffage présente également l'une ou plusieurs des caractéristiques suivantes, prise(s) isolément ou suivant toute(s) combinaison(s) techniquement possible(s) :

- chaque brin présente une épaisseur, prise parallèlement à la direction de circulation du flux de gaz d'échappement à travers la grille chauffante, et une largeur, prise perpendiculairement à la direction de circulation du flux de gaz d'échappement à travers la grille chauffante et perpendiculairement à la direction de plus grande dimension dudit brin, l'épaisseur étant supérieure à la largeur;
- le rapport de l'épaisseur sur la largeur est supérieur à 1,5 et de préférence supérieur à 2,0.
- le rapport de l'épaisseur sur la largeur est inférieur à 10 et de préférence inférieur à 5 ;
- chaque brin d'un élément chauffant allongé occupant un secteur angulaire donné est tangent à un brin correspondant de chacun des éléments chauffants allongés occupant les secteurs angulaires voisins ;
- les noeuds sont agencés sur une pluralité de lignes d'isopotentiel à contour fermé et, pour chaque noeud agencé sur une ligne d'isopotentiel, le rapport entre la longueur dudit noeud, mesurée entre les brins qu'il raccorde, et la section dudit noeud, mesurée perpendiculairement à la longueur, est sensiblement égal au rapport entre la longueur et la section de chaque autre noeud agencé sur la même ligne d'isopotentiel
- les brins d'un même élément chauffant allongé sont régulièrement répartis entre le support central et le cadre périphérique ;
- chaque brin est sensiblement constitué par une homothétie, centrée sur le centre géométrique, de la portion du bord interne du cadre périphérique embrassée par le secteur angulaire occupé par l'élément chauffant allongé auquel ledit brin appartient ;

- chaque secteur angulaire de la grille chauffante embrasse une portion du bord interne du cadre périphérique de longueur égale à la longueur du bord interne embrassée par chaque autre secteur angulaire ;
- le bord interne du cadre périphérique n'est pas circulaire et est de préférence ovale ;
- le bord interne du cadre périphérique a sensiblement la forme d'une ellipse centrée sur le centre géométrique ayant un demi grand axe de longueur a et un demi petit axe de longueur b, ledit bord interne étant constitué par la réunion de quatre courbes formées chacune par la réunion de deux arcs de cercle tangents l'un à l'autre, dont :

  • un premier arc de cercle de rayon R1 et centré sur un premier centre interposé entre le centre géométrique et un sommet du grand axe de l'ellipse et disposé à la distance R1 dudit sommet , où $R1 = \frac{c^2 - a \times c + b \times c}{2 \times a}$ , avec $c = \sqrt{a^2 + b^2}$ , et

  • un deuxième arc de cercle de rayon R2 et centré sur un deuxième centre aligné avec le petit axe de l'ellipse et disposé à la distance R2 d'un sommet dudit petit axe, où $R2 = \frac{a^3 + a^2 c - a^2 b + ab^2 - b^3 + cb^2}{2bc}$ ;

- la grille chauffante a une forme de dôme dont le sommet est formé par le support central et la base par le cadre périphérique ; et
- chaque brin de chaque élément chauffant allongé a une forme d'arc de cercle.

L'invention a également pour objet un organe d'alimentation pour un dispositif de purification des gaz d'échappement d'un véhicule, l'organe d'alimentation comprenant :

- une alimentation électrique ;
- une enveloppe en un matériau électriquement conducteur, ladite enveloppe ayant une face amont par laquelle les gaz d'échappement pénètrent dans l'organe d'alimentation et une face aval par laquelle les gaz d'échappement sortent de l'organe d'alimentation, l'enveloppe étant raccordée électriquement à une première borne de l'alimentation électrique ou à la masse,
- un organe de chauffage tel que décrit plus haut, logé dans l'enveloppe, en regard de la face aval, l'organe de chauffage étant monté dans ladite enveloppe de sorte que le cadre périphérique soit en contact électrique avec l'enveloppe, et
- une électrode raccordant électriquement le support central à une deuxième borne de ladite alimentation électrique, ladite électrode s'étendant à travers l'enveloppe en étant électriquement isolée de ladite enveloppe.

Selon un mode de réalisation particulier de l'invention, l'organe d'alimentation présente également la caractéristique suivante :

- la grille chauffante a une forme de dôme dont le sommet est formé par le support central et la base par le cadre périphérique, et l'organe de chauffage est monté dans l'organe d'alimentation de sorte que la convexité du dôme soit orientée vers l'amont.

L'invention a encore pour objet :

- un dispositif de purification des gaz d'échappement d'un moteur à combustion interne comprenant au moins un organe de purification des gaz d'échappement ayant une face amont par laquelle les gaz d'échappement pénètrent dans l'organe de purification et une face aval par laquelle les gaz d'échappement sortent de l'organe de purification, le dispositif de purification comprenant en outre au moins un organe d'alimentation tel que défini plus haut disposé de sorte à faire sensiblement coïncider la face aval de l'enveloppe dudit organe d'alimentation avec la face amont de l'organe de purification ;
- une ligne d'échappement de moteur à combustion interne comprenant au moins un tel dispositif de purification ; et
- un véhicule automobile comprenant une telle ligne d'échappement.

D'autres caractéristiques et avantages de l'invention apparaîtront à la lecture de la description qui va suivre, donnée uniquement à titre d'exemple et faite en se référant aux dessins annexés, dans lesquels :

- [Fig 1] la Figure 1 est une représentation schématique simplifiée d'une ligne d'échappement de véhicule automobile intégrant un dispositif de purification des gaz d'échappement selon l'invention,

- [Fig 2] la Figure 2 est une vue en perspective d'une partie d'un dispositif de purification de la ligne d'échappement de la Figure 1, dont la paroi extérieure a été représentée partiellement découpée de sorte à laisser visible l'intérieur du dispositif,
- [Fig 3] la figure 3 est une vue de face d'un organe de chauffage équipant le dispositif de purification de la figure 2, selon un premier mode de réalisation de l'invention,
- [Fig 4] la Figure 4 est une vue de face, simplifiée, de l'organe de chauffage de la Figure 3, ladite vue simplifiée faisant ressortir un élément chauffant allongé composant ledit organe de chauffage et les relations géométriques associées à cet élément chauffant allongé,
- [Fig 5] la Figure 5 est une vue en perspective d'un détail marqué V de la Figure 3,
- [Fig 6] la figure 6 est une vue de face d'un organe de chauffage équipant le dispositif de purification de la figure 2, selon une première variante d'un deuxième mode de réalisation de l'invention, et
- [Fig 7] la Figure 7 est une vue de côté d'un organe de chauffage équipant le dispositif de purification de la figure 2, selon une deuxième variante du deuxième mode de réalisation de l'invention.

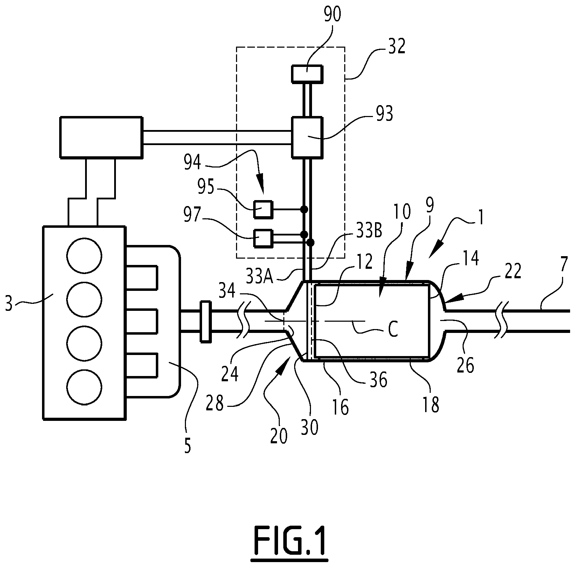

La ligne d'échappement 1 représentée sur la figure 1 est destinée à être implantée à bord d'un véhicule, typiquement d'un véhicule équipé d'un moteur thermique 3. Ce véhicule est typiquement un véhicule automobile, par exemple une voiture ou un camion.

Comme visible sur la figure 1, la ligne d'échappement 1 comprend un collecteur 5 captant les gaz d'échappement sortant des chambres de combustion du moteur thermique 3, et une canule 7 permettant le relargage des gaz d'échappement dans l'atmosphère. La ligne d'échappement 1 comprend également un dispositif 9 de purification des gaz d'échappement, interposé fluidiquement entre le collecteur 5 et la canule 7, de sorte que les gaz d'échappement parvenant à la canule 7 aient été purifiés par ledit dispositif de purification 9.

Ce dispositif de purification 9 comporte au moins un organe 10 de purification des gaz d'échappement ayant une face amont 12 par laquelle les gaz d'échappement pénètrent dans l'organe de purification 10, et une face aval 14 par laquelle les gaz d'échappement sortent de l'organe de purification 10.

Dans la présente description, l'amont et l'aval sont entendus relativement au sens de circulation normal des gaz d'échappement dans la ligne d'échappement 1.

L'organe de purification 10 est par exemple un catalyseur SCR, un catalyseur trois voies, un catalyseur d'oxydation, un filtre à particules SCRF, ou un piège à NOx. Il présente un axe de symétrie (non représenté).

Le dispositif de purification 9 comprend également un fourreau 16 à l'intérieur duquel est placé l'organe de purification 10, et une nappe de maintien 18 interposée entre l'organe de purification 10 et le fourreau 16.

Le dispositif de purification 9 comprend encore un organe d'alimentation 20, pour l'alimentation de l'organe de purification 10 avec les gaz d'échappement provenant du collecteur 5, et un organe de collecte 22, pour collecter les gaz d'échappement purifiés sortant de l'organe de purification 10 et les diriger vers la canule 7.

L'organe d'alimentation 20 est typiquement constitué par un cône d'entrée ou par un mélangeur. Il est interposé fluidiquement entre le collecteur 5 et l'organe de purification 10, et comprend une entrée de gaz d'échappement 24 raccordée fluidiquement au collecteur 5.

L'organe de collecte 22 est typiquement constitué par un cône de sortie. Il est interposé fluidiquement entre l'organe de purification 10 et la canule 7, et comprend une sortie de gaz d'échappement 26 raccordée fluidiquement à la canule 7.

L'organe d'alimentation 20 comprend plus particulièrement une enveloppe 28 en matériau électriquement conducteur, délimitant un passage pour les gaz d'échappement, et un organe de chauffage 30 logé dans l'enveloppe 28. L'organe d'alimentation 20 comprend également une alimentation électrique 32 avec une première borne 33A et une deuxième borne 33B pour l'alimentation de l'organe de chauffage 30 en électricité.

L'enveloppe 28 est raccordée électriquement à la première borne 33A de l'alimentation électrique 32, typiquement au moyen d'une connexion électrique formée par une tige filetée soudée sur l'enveloppe 28. En variante (non représentée), l'enveloppe 28 est raccordée électriquement à la masse au moyen du même type de connexion électrique.

Comme visible sur la Figure 1, l'enveloppe 28 présente une face amont 34 par laquelle les gaz d'échappement pénètrent dans l'organe d'alimentation 20, et une face aval 36 par laquelle les gaz d'échappement sortent de l'organe d'alimentation 20. L'enveloppe 28 est adaptée pour guider jusqu'à la face aval 36 les gaz pénétrant par la face amont 34. L'organe d'alimentation 20 est disposé relativement à l'organe de purification 10 de sorte que la face aval 36 de l'enveloppe 28 coïncide sensiblement avec la face amont 12 de l'organe de purification 10.

L'enveloppe 28 constitue une pièce structurelle adaptée pour subir les contraintes mécaniques propres à une ligne d'échappement sans se déformer.

L'enveloppe 28 est fixée au fourreau 16, typiquement par soudure, rivetage ou vissage.

La face aval 36 de l'enveloppe 28 est centrée sur un axe C sensiblement confondu avec l'axe de symétrie de l'organe de purification 10.

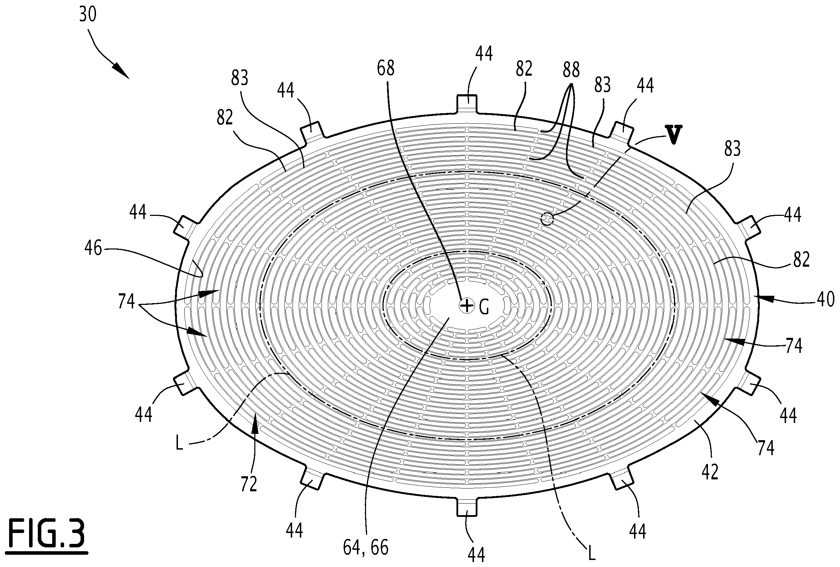

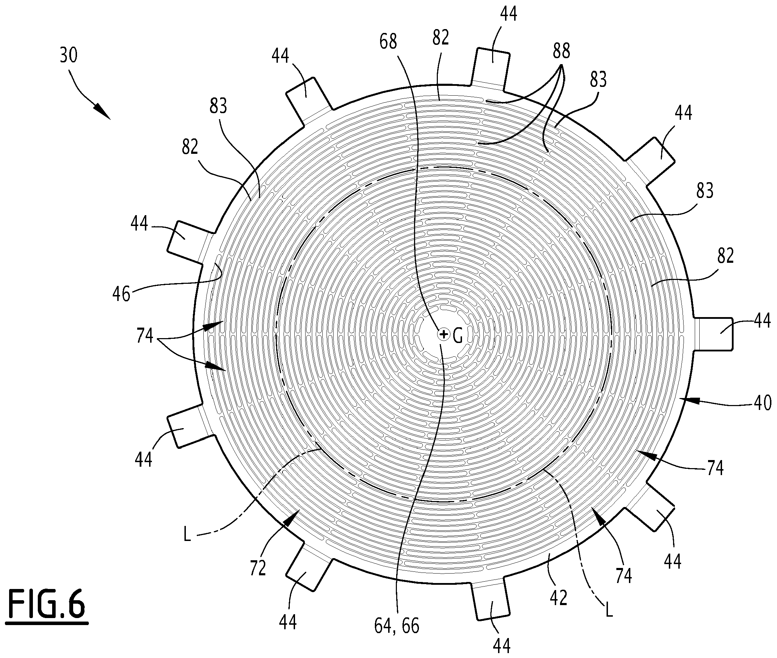

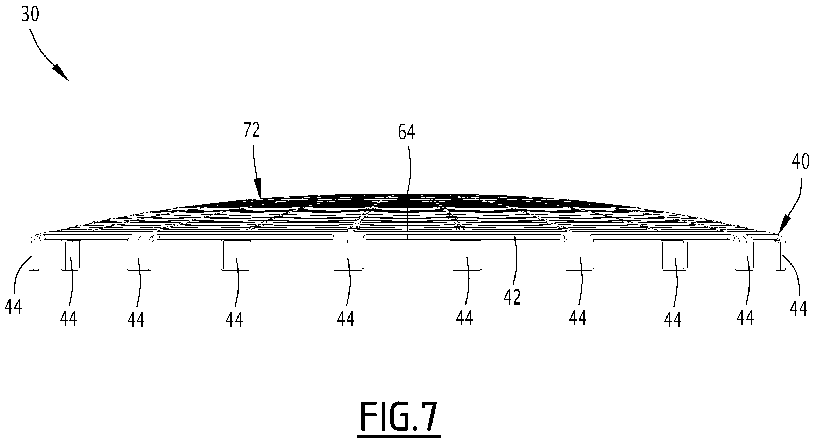

Selon un premier mode de réalisation de l'invention, illustré plus en détail par les Figures 3 à 5, la section de la face aval 36 n'est pas circulaire et est en particulier sensiblement elliptique. Selon un deuxième mode de réalisation de l'invention, illustré plus en détail par les Figures 6 et 7, la section de la face aval 36 est circulaire.

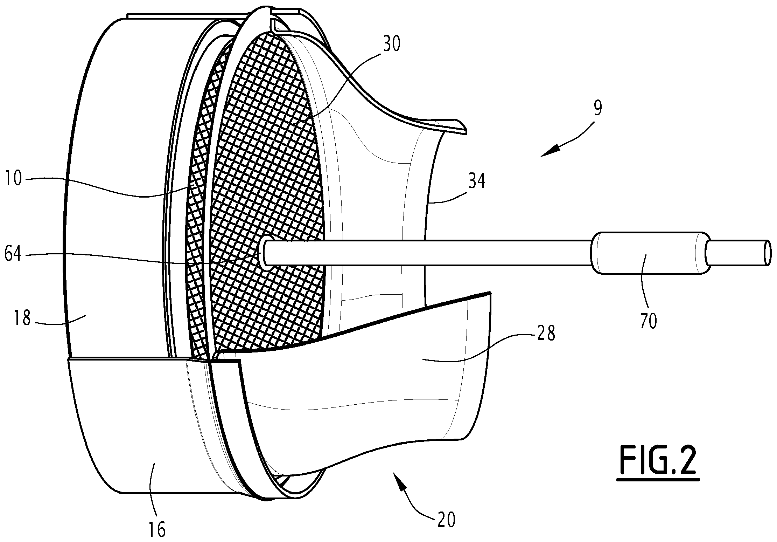

Comme visible sur la Figure 2, l'organe de chauffage 30 est logé dans l'enveloppe 28 en regard de la face aval 36, en léger retrait vers l'intérieur de l'organe d'alimentation 20 par rapport à cette face aval 36. Par « en léger retrait », on comprend que l'organe de chauffage 30 est à une distance de la face aval 36 comprise entre 1 et 50 mm. L'organe de chauffage 30 est ainsi placé en regard et à distance de la face amont 12 de l'organe de purification 10.

En alternative (non représentée), l'organe de chauffage 30 est logé dans l'enveloppe 28 en regard de la face amont 34, en léger retrait vers l'intérieur de l'organe d'alimentation 20 par rapport à cette face amont 34.

De préférence, l'organe de chauffage 30 est sensiblement plan, c'est-à-dire qu'il présente une épaisseur axiale inférieure à 10% de son diamètre radial.

L'organe de chauffage 30 est réalisé en un matériau conducteur. Il est de préférence formé d'une pièce.

Le matériau conducteur est par exemple choisi parmi le Fer-Chrome-Aluminium (FeCrAl) et ses alliages, le Nickel-Chrome (NiCr) et ses alliages, l'acier inoxydable, l'Inconel® ou le carbure de silicium. Par exemple, le matériau est du Kanthal® A1, du Nichrome® 80, Nichrome® 70, du Nikrothal® 80 ou Nikrothal® 70.

L'organe de chauffage 30 est typiquement réalisé par découpage d'une feuille de matériau conducteur. Ce découpage est par exemple réalisé par laser, par découpage fin (« fine-blanking »), par découpe chimique, ou par tout autre moyen permettant de créer des orifices dans la plaque.

En variante, l'organe de chauffage 30 est réalisé par fabrication additive, notamment par impression tridimensionnelle.

L'organe de chauffage 30 est autoportant.

En référence à la Figure 3, l'organe de chauffage 30 comprend une couronne de fixation 40. Cette couronne de fixation 40 comprend un cadre périphérique 42 électriquement conducteur présentant un bord interne 46 ayant un centre géométrique G, et une pluralité de saillies radiales 44 électriquement conductrices réparties autour du cadre périphérique 42, chaque saillie radiale 44 faisant saillie depuis le cadre périphérique 42 dans une direction opposée au centre géométrique G du cadre périphérique 42.

Le cadre périphérique 42 définit un plan (non représenté) sensiblement orthogonal à l'axe C.

Dans le premier mode de réalisation représenté ici, le bord interne 46 du cadre périphérique 42 n'est pas circulaire et est en particulier ovale. Il est ici sensiblement elliptique, c'est-à-dire qu'il a sensiblement la forme d'une ellipse 47 dont les sommets $S_1$, $S_2$, $S_3$ et $S_4$ appartiennent au bord interne 46, cette ellipse 47 étant de centre géométrique G et ayant un demi grand axe de longueur a et un demi petit axe de longueur b, chaque point du bord interne 46 étant à une distance de ladite ellipse 47 inférieure à 10 % de la longueur du rayon de l'ellipse 47 passant par ce point.

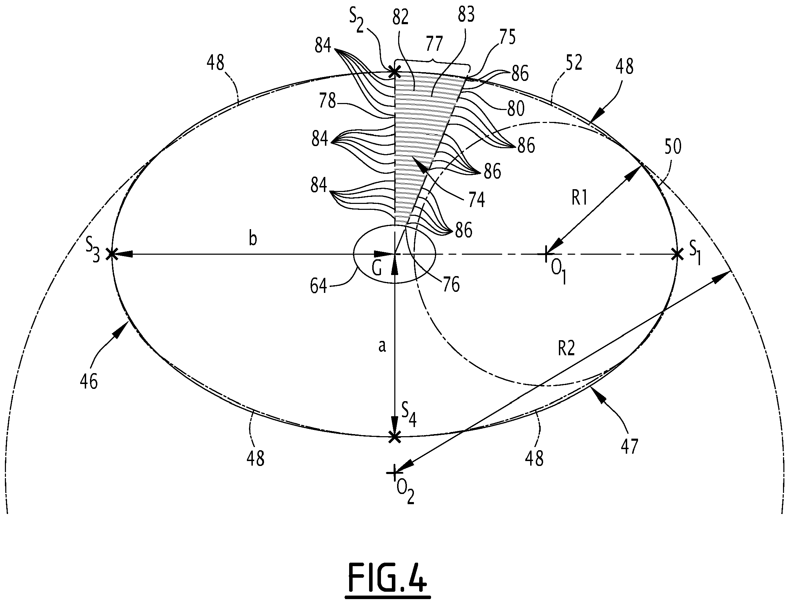

En référence à la Figure 4, le bord interne 46 est plus particulièrement constitué par la réunion de quatre courbes 48 formées chacune par la réunion de deux arcs de cercle 50, 52 tangents l'un à l'autre, dont :

- un premier arc de cercle 50 de rayon R1 et centré sur un centre $O_1$ interposé entre le centre géométrique G et un sommet $S_1$ du grand axe de l'ellipse 47 et disposé à une distance dudit sommet $S_1$ égale au rayon R1, où $R1 = \frac{c^2 - a \times c + b \times c}{2 \times a}$, avec $c = \sqrt{a^2 + b^2}$, et

- un deuxième arc de cercle 52 de rayon R2 et centré sur un centre $O_2$ aligné avec le petit axe de l'ellipse 47 et disposé à une distance d'un sommet $S_2$ dudit petit axe égale au rayon R2, où $R2 = \frac{a^3 + a^2 c - a^2 b + ab^2 - b^3 + cb^2}{2bc}$.

La longueur P du bord interne 46 est ainsi donnée par la formule suivante :

$$P = \pi \left(a + b\right) . \left(1 + \frac{3h}{10 + \sqrt{4 - 3h}}\right), \text{ avec } h = \frac{(a-b)^2}{(a+b)^2}.$$

Cette forme spécifique du bord interne 46 facilite la conception de l'organe de chauffage 30 puisque, comme cela va être détaillé par la suite, celui-ci peut ainsi être composé essentiellement d'éléments en arc de cercle, qui est une forme géométrique simple et parfaitement maîtrisée.

En variante, le bord interne 46 est constitué par une ellipse parfaite.

Le centre géométrique G est sensiblement aligné avec l'axe C, c'est-à-dire que le centre géométrique G est à une distance de l'axe C inférieure à 10 mm, avantageusement inférieure à 5 mm.

Chaque saillie radiale 44 est avantageusement venue de matière avec le cadre périphérique 42. Elle est typiquement constituée par une patte formée d'une pièce avec le cadre périphérique 42.

La couronne de fixation 40 est soudée, brasée ou emmanchée en force dans l'enveloppe 28 de sorte que chaque saillie radiale 44 soit en contact avec l'enveloppe 28. Ainsi, la couronne de fixation 40, et en particulier son cadre périphérique 42, est sensiblement au même potentiel électrique que l'enveloppe 28.

L'organe de chauffage 30 comprend également un support central 64 disposé sensiblement au centre géométrique G du bord interne 46 du cadre périphérique 42.

Le support central 64 a une épaisseur sensiblement égale à l'épaisseur du cadre périphérique 42.

De préférence, le support central 64 et le cadre périphérique 42 sont situés sensiblement dans un même plan, c'est-à-dire qu'il existe un plan passant par deux extrémités opposées du cadre 42 et traversant le support 64.

Le support central 64 présente une plus grande dimension inférieure à 20% de la plus grande dimension du bord interne 46 du cadre périphérique 42.

Le support central 64 est en particulier constitué par une rondelle 66 en matériau conducteur, centrée sur le centre géométrique G.

Le contour de cette rondelle 66 est une homothétie de centre G du bord interne 46 du cadre périphérique 42. Ainsi, le contour de la rondelle 66 est, dans ce premier mode de réalisation, ovale et a en particulier sensiblement une forme d'ellipse dont les petit et grand axes sont alignés, respectivement, avec les petit et grand axes de l'ellipse 47.

Ici, la rondelle 66 est pleine, à l'exception d'un orifice traversant 68 formé en son centre. En variante (non représentée), la rondelle 66 contient des découpes.

Comme visible sur la Figure 2, le support central 64 est raccordé électriquement à la deuxième borne 33B de l'alimentation électrique 32 par une électrode 70 s'étendant à travers l'enveloppe 28 en étant isolée électriquement de cette dernière. Le support central 64 est en particulier lié à ladite électrode 70 par vissage, soudage, brasage, ou tout autre moyen adapté.

L'électrode 70 est rigidement fixée à l'enveloppe 28.

De retour à la Figure 3, l'organe de chauffage 30 comprend encore une grille chauffante 72 ajourée, centrée sur le centre géométrique G et s'étendant depuis le support central 64 jusqu'au cadre périphérique 42.

Cette grille chauffante 72 est autoportante.

La grille chauffante 72 présente une épaisseur sensiblement constante, et de préférence constante. Elle a avantageusement une épaisseur sensiblement égale à l'épaisseur du cadre périphérique 42 et à celle du support central 64.

La grille chauffante 72 est monomatière. Elle est réalisée en un matériau conducteur. Elle est en particulier venue de matière avec le cadre périphérique 42 et le support central 64.

La grille chauffante 72 est formée d'une pluralité d'éléments chauffants allongés 74. Ici, le nombre de ces éléments chauffants allongés 74 est un multiple de quatre.

Comme visible sur la Figure 4, chaque élément chauffant allongé 74 a une première extrémité 75 et une seconde extrémité 76 opposées l'une à l'autre. La première extrémité 75 est liée au cadre périphérique 42, et la seconde extrémité 76 est liée au support central 64.

La première extrémité 75 est ainsi raccordée électriquement à la première borne 33A de l'alimentation électrique 32, et la seconde extrémité 76 est raccordée électriquement à la deuxième borne 33B de l'alimentation électrique 32. Il existe par conséquent, lorsque l'alimentation électrique 32 est active, une différence de potentiel électrique entre la première extrémité 75 et la deuxième extrémité 76 de chaque élément chauffant allongé 74. Cette différence de potentiel électrique est fonction de la différence de potentiel entre les bornes 33A, 33B de l'alimentation électrique 32.

Chaque élément chauffant allongé 74 occupe un secteur angulaire 77 respectif autour du centre géométrique G. Ce secteur angulaire 77 est défini entre un premier rayon 78 et un deuxième rayon 80 s'étendant chacun depuis le centre géométrique G jusqu'au cadre périphérique 42. Ici, les premier et deuxième rayons 78, 80 sont choisis de sorte que l'angle allant du premier rayon 78 vers le deuxième rayon 80 soit un angle négatif.

Les secteurs angulaires 77 occupés par les éléments chauffants allongés 74 se jouxtent les uns aux autres. Ainsi, chaque secteur angulaire 77 occupé par un élément chauffant allongé 74 est interposé entre un premier et un deuxième secteurs angulaires 77 voisins occupés chacun par un élément chauffant allongé 74 respectif, le premier rayon 78 dudit secteur angulaire 77 se confondant avec le deuxième rayon 80 du premier secteur angulaire 77 voisin, et le deuxième rayon 80 dudit secteur angulaire 77 se confondant avec le premier rayon 78 du deuxième secteur angulaire 77 voisin.

Comme représenté sur la Figure 4, au moins un de ces secteurs angulaires 77 est tel que son premier rayon 78 est constitué par un demi petit axe ou un demi grand axe de l'ellipse 47. Avantageusement, au moins un autre de ces secteurs angulaires 77 est tel que son deuxième rayon 80 est constitué par un demi grand axe, respectivement par un demi petit axe, de ladite ellipse 47.

Chaque élément chauffant allongé 74 est agencé en zigzag à l'intérieur du secteur angulaire 77 qu'il occupe de sorte à former une succession de brins 82, 83 raccordés au support central 64, au cadre périphérique 42 et les uns aux autres par des coudes 84, 86.

Chaque brin 82, 83 s'étend du premier rayon 78 jusqu'au deuxième rayon 80.

Avantageusement, les brins 82, 83 dudit élément chauffant allongé 74 sont régulièrement répartis entre le support central 64 et le cadre périphérique 42, de sorte que chaque brin 82, 83 interposé entre deux autres brins 82, 83 est équidistant desdits deux autres brins 82, 83, et que chaque brin 82, 83 d'extrémité est équidistant du brin 82, 83 le plus proche et du support central 64 ou du cadre périphérique 42.

Les coudes 84, 86 comprennent des premiers coudes 84 alignés les uns avec les autres le long du premier rayon 78, et des deuxièmes coudes 86 alignés les uns avec les autres le long du deuxième rayon 80. Les premiers coudes 84 sont espacés les uns des autres, et les deuxièmes coudes 86 sont espacés les uns des autres.

Les premiers et deuxième coudes 84, 86 sont disposés en alternance les uns avec les autres, depuis le support central 64 jusqu'au cadre périphérique 42 ; en d'autres termes, pour chaque paire de premiers coudes 84 successifs, il existe un deuxième coude 86 qui est à une distance du centre géométrique G supérieure à la distance séparant le centre géométrique G de l'un des coudes 84 de la paire et inférieure à la distance séparant le centre géométrique G de l'autre coude 84 de la paire, et vice-versa.

Les brins 82, 83 comprennent des premiers brins 82 et des deuxièmes brins 83. Chaque premier brin 82 est raccordé par un premier coude 84 à un brin 83 plus proche du centre géométrique G, ou au support central 64, et par un deuxième coude 86 à un brin 83 plus éloigné du centre géométrique G, ou au cadre périphérique 42. Chaque deuxième brin 83 est raccordé par un deuxième coude 86 à un brin 82 plus proche du centre géométrique G, ou au support central 64, et par un premier coude 84 à un brin 82 plus éloigné du centre géométrique G, ou au cadre périphérique 42.

Les premier et deuxième brins 82, 83 sont disposés en alternance les uns avec les autres, depuis le support central 64 jusqu'au cadre périphérique 42 ; en d'autres termes, pour chaque paire de premiers brins 82 successifs, il existe un deuxième brin 83 qui est interposé entre lesdits premiers brins 82, et vice-versa.

Chaque élément chauffant allongé 74 est lié par lesdits coudes 84, 86, et exclusivement par lesdits coudes 84, 86, aux éléments chauffants allongés 74 occupant les secteurs angulaires 77 voisins. Ainsi, pour chaque paire d'éléments chauffants allongés 74 voisins, chaque premier coude 84 de l'un de ces éléments allongés 74 est en contact avec un deuxième coude 86 respectif de l'autre élément allongé 74, lesdits premier et deuxième coudes 84, 86 étant au même potentiel électrique et formant ensemble un noeud 88 (Figure 3).

Comme visible sur la Figure 3, à la jonction entre les éléments chauffants allongés 74 occupant deux secteurs angulaires 77 voisins, chaque brin 82, 83 de chaque élément chauffant allongé 74 est tangent à un brin 82, 83 correspondant de l'autre élément chauffant allongés 74. Ainsi, la jonction entre ces éléments chauffants allongés 74 est dépourvue de point angulaire, ce qui permet une meilleure répartition des contraintes au sein de la grille chauffante 72 et renforce la tenue thermomécanique de la grille chauffante 72.

Pour chaque brin 82, 83 d'un élément chauffant allongé 74, ce brin 82, 83 forme, avec les brins 82, 83 correspondants des autres éléments chauffants allongés 74, un contour fermé sensiblement centré sur le centre géométrique G. Ce contour fermé est en particulier sensiblement une homothétie de centre G du bord interne 46 du cadre périphérique 42 ; ici, il s'agit donc d'une forme sensiblement elliptique.

Les brins 82, 83 forment ainsi des anneaux concentriques centrés sur le centre géométrique G et reliés au support central 64, au cadre périphérique 42 et les uns aux autres par des noeuds 88 disposés en quinconce.

Tous les noeuds 88 sont agencés sur une pluralité de lignes d'isopotentiel L à contour fermé. Certaines de ces lignes sont matérialisées sur la Figure 3. Les lignes d'isopotentiel L sont sensiblement centrées sur le centre géométrique G.

Aucune ligne d'isopotentiel L ne croise l'un des anneaux concentriques formés par les brins 82, 83.

Ici, les lignes d'isopotentiel L sont des homothéties de centre G du bord interne 46 du cadre périphérique 42.

Tous les noeuds 88 à un même potentiel électrique sont placés sur une même ligne d'isopotentiel L. Il est possible que certaines lignes d'isopotentiel L soient confondues.

Ici, les lignes d'isopotentiel L présentent toutes un diamètre moyen croissant quand le potentiel électrique décroît.

Pour permettre un tel agencement, tous les noeuds 88 localisés sur une même ligne d'isopotentiel L sont situés le long desdits éléments chauffants allongés 74 à une même distance électrique des premières extrémités 75 respectives des éléments chauffants allongés 74.

Ces noeuds 88 sont également situés typiquement à une même distance électrique des secondes extrémités 76 respectives desdits éléments chauffants allongés 74.

Par « distance électrique » entre deux points, on comprend ici et dans la suite la valeur de la résistance électrique entre ces deux points. Ainsi, il est équivalent de dire que deux paires de points ont leurs points respectifs à une même distance électrique l'un de l'autre et de dire que la résistance électrique entre les points de la première paire est égale à la résistance électrique entre les points de la deuxième paire.

A cet effet, chaque secteur angulaire 77 de la grille chauffante 72 embrasse une portion du bord interne 46 du cadre périphérique 42 de longueur égale à la longueur du bord interne 46 du cadre périphérique 42 embrassée par chaque autre secteur angulaire 77.

Ainsi, pour chaque quart de l'ellipse 47, chaque rayon 78, 80 formant la séparation entre deux secteurs angulaires 77 adjacents compris dans ce quart d'ellipse est tel que :

- lorsque $n \times \frac{P}{N} \leq R2 \times cos^{-1}(\frac{a}{c})$, où n est le nombre de secteurs angulaires 77 interposés entre le petit axe de l'ellipse 47 et ledit rayon 78, 80, et N est le nombre total de secteurs angulaires 77, le rayon 78, 80 forme avec le petit axe de l'ellipse 47 un angle sensiblement égal à $tan^{-1}(\frac{R2 \times sin(\frac{n \times P}{N \times R2})}{b + R2 \times (cos(\frac{n \times P}{N \times R2}) - 1)})$, et

- lorsque $n \times \frac{P}{N} > R2 \times cos^{-1}(\frac{a}{c})$, le rayon 78, 80 forme avec le grand axe de l'ellipse 47 un angle sensiblement égal à $tan^{-1}(\frac{R1 \times sin(\frac{q \times P}{N \times R1})}{a + R1 \times (cos(\frac{q \times P}{N \times R1}) - 1)})$, où q est le nombre de secteurs angulaires 77 interposés entre le grand axe de l'ellipse 47 et ledit rayon 78, 80.

De plus, pour chaque élément chauffant allongé 74, chaque brin 82, 83 est sensiblement une homothétie de centre G et de rapport h/H de la portion du bord interne 46 du cadre périphérique 42 embrassée par le secteur angulaire 77 occupé par l'élément chauffant allongé 74, où h est la distance du centre géométrique G au milieu du brin 82, 83, et H est la distance du centre géométrique G au milieu de la portion du cadre périphérique 42 embrassée par le secteur angulaire 77, les brins 82, 83 correspondants d'éléments chauffants allongés 74 différents ayant des rapports h/H sensiblement égaux.

En particulier, pour chaque élément chauffant allongé 74 occupant un secteur angulaire 77 qui embrasse une portion du bord interne 46 du cadre périphérique 42 formée par le premier arc de cercle 50, chaque brin 82, 83 dudit élément chauffant allongé 74 est constitué par une homothétie exacte de ladite portion du bord interne 46. Chaque brin 82, 83 est ainsi constitué par un arc de cercle de rayon $R1 \times \left(\frac{d}{b} + \frac{i+1}{k+1} \times (1 - \frac{d}{b})\right)$ et centré en un point tel que la distance dudit point au centre géométrique G est égale à $(a - R1) \times \frac{d}{b} + \frac{i+1}{k+1} \times (a - R1) \times \left(1 - \frac{d}{b}\right)$, où : d est le demi petit axe du support central 64, i est le nombre de brins 82, 83 interposés entre ledit brin 82, 83 et le support central 64, et k est le nombre total de brins 82, 83 composant l'élément chauffant allongé 74.

De même, pour chaque élément chauffant allongé 74 occupant un secteur angulaire 77 qui embrasse une portion du bord interne 46 du cadre périphérique 42 formée par le deuxième arc de cercle 52, chaque brin 82, 83 dudit élément chauffant allongé 74 est constitué par une homothétie exacte de ladite portion du bord interne 46. Chaque brin 82, 83 est ainsi constitué par un arc de cercle de rayon $R2 \times \left(\frac{d}{b} + \frac{i+1}{k+1} \times (1 - \frac{d}{b})\right)$ et centré en un point tel que la distance dudit point au centre géométrique G est égale à $(R2 - b) \times \frac{d}{b} + \frac{i+1}{k+1} \times (R2 - b) \times \left(1 - \frac{d}{b}\right)$.

Par ailleurs, pour chaque élément chauffant allongé 74 occupant un secteur angulaire 77 qui embrasse une portion du bord interne 46 du cadre périphérique 42 à cheval sur la partie formée par le premier arc de cercle 50 et sur celle formée par le deuxième arc de cercle 52, chaque brin 82, 83 dudit élément chauffant allongé 74 est constitué par un arc de cercle tangent aux brins 82, 83 des éléments chauffants allongés 74 occupant les secteurs angulaires 77 voisins.

Chaque brin 82, 83 a ainsi une longueur sensiblement égale à la longueur de chaque brin 82, 83 correspondant de chaque autre élément chauffant allongé 74. En outre, chaque brin 82, 83 a ainsi une forme d'arc de cercle, ce qui permet d'assurer une bonne tenue mécanique de chaque brin 82, 83, et donc de la grille chauffante 72.

Par ailleurs, chaque brin 82, 83 a une section droite, prise perpendiculairement à sa longueur, sensiblement égale à la section droite de chaque brin 82, 83 correspondant de chaque autre élément chauffant allongé 74.

Ainsi, chaque brin 82, 83 a une résistance électrique sensiblement égale à la résistance électrique de chaque brin 82, 83 correspondant de chaque autre élément chauffant allongé 74.

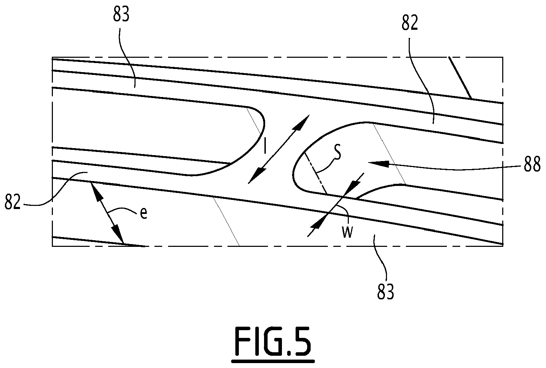

Enfin, en référence à la Figure 5, le rapport entre la longueur I de chaque noeud 88, mesurée radialement entre les brins 82, 83 d'un même élément chauffant allongé 74 qu'il raccorde, et la section droite minimale S dudit noeud 88, mesurée perpendiculairement à la longueur I, est sensiblement égal au rapport entre la longueur I et la section droite minimale S de chaque autre noeud 88 disposé sur la même ligne d'isopotentiel L que le noeud 88.

Ainsi, chaque noeud 88 agencé sur une ligne d'isopotentiel L a une résistance électrique sensiblement égale à la résistance électrique de chaque autre noeud 88 agencé sur la même ligne d'isopotentiel L. En conséquence, pour chaque paire de brin 82, 83 de chaque élément chauffant allongé 74, la résistance électrique entre ces brins 82, 83 est sensiblement égale à la résistance électrique entre les brins 82, 83 correspondants de chaque autre élément chauffant allongé 74.

Il en résulte que chaque élément chauffant allongé 74 présente une résistance électrique, entre ses première et deuxième extrémités 75, 76, sensiblement égale à la résistance électrique de chaque autre élément chauffant allongé 74. En outre, tous les noeuds 88 localisés sur une même ligne d'isopotentiel L sont situés le long desdits éléments chauffants allongés 74 à une même première distance électrique des premières extrémités 75 respectives des éléments chauffants allongés 74 et à une même deuxième distance électrique des secondes extrémités 76 respectives desdits éléments chauffants allongés 74.

Ainsi, la grille chauffante 72 ne présente pas de chemin préférentiel pour la circulation du courant électrique entre le support central 64 et le cadre périphérique 42. Le courant électrique fourni par l'alimentation électrique 32 peut donc se répartir de manière homogène dans la grille chauffante 72, entraînant de ce fait une chauffe homogène de cette dernière.

Toujours en référence à la Figure 5, chaque brin 82, 83 de chaque élément chauffant allongé 74 présente une épaisseur e, prise parallèlement à la direction de circulation du flux de gaz d'échappement à travers la grille chauffante 72, c'est-à-dire perpendiculairement au plan de l'organe de chauffage 30, et une largeur w, prise perpendiculairement à la direction de circulation du flux de gaz d'échappement à travers la grille chauffante 72, c'est-à-dire dans le plan de l'organe de chauffage 30, et perpendiculairement à la direction de plus grande dimension dudit brin 82, 83, telles que l'épaisseur e soit supérieure à la largeur w, le rapport de l'épaisseur e sur la largeur w étant avantageusement supérieur à 1,5 et de préférence supérieur à 2,0. Ainsi, la section droite de chaque brin 82, 83, perpendiculairement à la direction de plus grande dimension dudit brin 82, 83, présente une forme générale rectangulaire ou ovale, ou une forme polygonale intermédiaire entre lesdites formes rectangulaire et ovale, par exemple une forme d'hexagone allongé.

Ainsi, la surface de la grille chauffante 72 soumise à la pression des gaz d'échappement est minimisée, ce qui permet de réduire les efforts s'exerçant sur la grille chauffante 72. En même temps, l'épaisseur de matière supplémentaire située en aval de la face de la grille chauffante 72 soumise à la pression des gaz d'échappement permet de renforcer la résistance mécanique de la grille chauffante 72 face à cette pression. Ces deux effets conjugués permettent d'augmenter significativement la durabilité de la grille chauffante 72.

De préférence, le rapport de l'épaisseur e sur la largeur w est inférieur à 10, par exemple inférieur à 5, de sorte à permettre une fabrication industrielle facile de la grille chauffante 72.

L'organe de chauffage 30 est avantageusement obtenu au moyen du procédé de conception suivant, ce procédé de conception étant typiquement mis en oeuvre par ordinateur.

Tout d'abord, on détermine une ellipse centrée sur le centre de la face aval 36 de l'enveloppe 28, et de dimension adaptée pour laisser suffisamment d'espace entre ladite ellipse et la paroi de l'enveloppe 28 pour pouvoir y loger le cadre périphérique 42 et les saillies 44. Cette ellipse constitue l'ellipse 47.

On trace ensuite l'une des courbes 48 composant le bord interne 46. A cet effet, on trace les arcs de cercle 50 et 52, et on les réunit pour former la courbe 48.

On trace ensuite une homothétie de chaque arc de cercle 50, 52, de centre G et de rapport $\frac{d}{b}$, ce rapport étant fixé à une valeur prédéterminée. La courbe formée par la réunion de ces homothéties constituera une portion du bord périphérique du support central 64.

On détermine ensuite le nombre N d'éléments chauffants allongés 74 devant composer la grille chauffante 72. A cet effet, on prend en compte la température nominale de fonctionnement de l'organe de chauffage 30, ainsi que la puissance thermique totale radiative nominale et éventuellement la puissance thermique totale convective nominale de l'organe de chauffage 30. Ces paramètres permettent de déterminer, avec l'aide des lois de radiation/convection et effet joule, une longueur totale théorique $L_T$ des éléments chauffants allongés 74 en fonction du périmètre (égal à la somme $2 \times e + 2 \times w$) et de la section (égale au produit $e \times w$) desdits éléments chauffants allongés 74. La résistance électrique R de cette longueur totale théorique $L_T$, donnée par la formule $R = \rho \times \frac{L_T}{S}$, où $\rho$ est la résistivité du matériaux, est ensuite ramenée à une résistance électrique cible Rt déterminée à partir de la tension nominale souhaitée pour l'alimentation électrique 32, et le rapport R/Rt est arrondi ou optimisé pour obtenir le nombre pair le plus proche, par exemple par dichotomie avec comme paramètre la température cible, ce nombre pair formant le nombre N d'éléments chauffants allongés 74.

On sélectionne ensuite un secteur angulaire 77, centré sur le centre géométrique G, adjacent au petit axe de l'ellipse 47 et formant un angle $tan^{-1}\left(\frac{R2 \times \sin\left(\frac{P}{N \times R2}\right)}{b + R2 \times \left(\cos\left(\frac{P}{N \times R2}\right) - 1\right)}\right)$, et on détermine le nombre k de brins 82, 83 devant composer l'élément chauffant allongé 74 occupant ce secteur angulaire 77 comme si l'élément chauffant allongé 74 occupait un secteur angulaire, d'angle $tan^{-1}(\frac{R2\times\sin(\frac{P}{N\times R2})}{b+R2\times(\cos(\frac{P}{N\times R2})-1)})$ , d'une grille ronde de rayon égal au demi petit axe b de l'ellipse 47 et dont le centre serait occupé par un support central de rayon égal à d. A cet effet, on calcule la longueur de l'élément chauffant allongé 74 pour un nombre i de brins radialement équirépartis entre ledit support central et la périphérie de la grille ronde, chaque brin étant constitué par un arc de cercle centré en $O_2$, et on procède par itération sur le nombre i jusqu'à obtenir une longueur la plus proche possible de la longueur totale théorique $L_T$. La valeur finale du nombre i constitue alors le nombre k.

On place ensuite les autres secteurs angulaires 77 de sorte que chaque rayon 78, 80 formant la séparation entre deux secteurs angulaires 77 adjacents soit tel que :

- lorsque $n\times\frac{P}{N}\leq R2\times\cos^{-1}(\frac{a}{c})$ , le rayon 78, 80 forme avec le petit axe de l'ellipse 47 un angle sensiblement égal à $tan^{-1}(\frac{R2\times\sin(\frac{n\times P}{N\times R2})}{b+R2\times(\cos(\frac{n\times P}{N\times R2})-1)})$ , et

- lorsque $n\times\frac{P}{N}> R2\times\cos^{-1}(\frac{a}{c})$ , le rayon 78, 80 forme avec le grand axe de l'ellipse 47 un angle sensiblement égal à $tan^{-1}(\frac{R1\times\sin(\frac{q\times P}{N\times R1})}{a+R1\times(\cos(\frac{q\times P}{N\times R1})-1)})$

Puis, pour chaque secteur angulaire 77 qui embrasse une portion de la courbe 48 formée par le premier arc de cercle 50, on trace une succession d'arcs de cercle de rayon $R1\times\left(\frac{d}{b}+\frac{i}{k+1}\times\left(1-\frac{d}{b}\right)\right)$ centrés chacun en un point respectif tel que la distance dudit point au centre géométrique G est égale à $(a-R1)\times\frac{d}{b}+\frac{i}{k+1}\times(a-R1)\times\left(1-\frac{d}{b}\right)$ , avec i nombre entier allant de 1 à k. Ces arcs de cercle constituent les brins 82, 83 de l'élément chauffant allongé 74 occupant ce secteur angulaire 77.

De même, pour chaque secteur angulaire 77 qui embrasse une portion de la courbe 48 formée par le deuxième arc de cercle 52, on trace une succession d'arcs de cercle de rayon $R2\times\left(\frac{d}{b}+\frac{i}{k+1}\times\left(1-\frac{d}{b}\right)\right)$ centrés chacun en un point respectif tel que la distance dudit point au centre géométrique G est égale à $(R2-b)\times\frac{d}{b}+\frac{i}{k+1}\times(R2-b)\times\left(1-\frac{d}{b}\right)$ , avec i nombre entier allant de 1 à k. Ces arcs de cercle constituent les brins 82, 83 de l'élément chauffant allongé 74 occupant ce secteur angulaire 77.

Ensuite, s'agissant du secteur angulaire 77 qui embrasse la portion de la courbe 48 à cheval sur la partie formée par le premier arc de cercle 50 et sur celle formée par le deuxième arc de cercle 52, on trace une succession d'arcs de cercle chacun tangent à un brin 82, 83 de chaque élément chauffant allongé 74 occupant un secteur angulaire 77 voisin. Ces arcs de cercle constituent les brins 82, 83 de l'élément chauffant allongé 74 occupant ce secteur angulaire 77.

Les brins 82, 83 sont ainsi tracés de sorte que, pour chaque paire de brins 82, 83 tangents l'un à l'autre, lesdits brins 82, 83 aient sensiblement la même section droite. Cette section droite est déterminée notamment en prenant en compte les caractéristiques de l'alimentation électrique 32, par exemple en prenant compte la différence de potentiel appliquée entre les première et seconde extrémités 76, 78 de l'élément chauffant allongé 74.

Puis on place les noeuds 88 le long des rayons 78, 80 formant la séparation entre les secteurs angulaires 77 de sorte que lesdits noeuds 88 soient espacés les uns des autres en assurant une continuité électrique et mécanique depuis le support central 64 jusqu'à la courbe 48. A cet effet, les noeuds 88 sont placés en quinconce, c'est-à-dire de sorte que, pour chaque paire de rayons 78, 80 adjacents, les noeuds 88 soient disposés en alternance sur l'un et l'autre rayon 78, 80, à mesure que leur distance au centre géométrique G augmente.

Les noeuds 88 sont par ailleurs conçus de sorte que, pour chaque noeud 88 disposé à une première distance d1 du centre géométrique G et à une deuxième distance d2 de la courbe 48, le rapport entre la longueur l et la section droite minimale S dudit noeud 88 soit sensiblement égal au rapport entre la longueur l et la section droite minimale S de chaque autre noeud 88 disposé à des distances du centre géométrique G et de la courbe 48 telles que le rapport entre ces distances soit sensiblement égal à d1/d2. Par exemple, les noeuds 88 sont conçus de sorte que le rapport entre la longueur l et la section droite minimale S des noeuds 88 soit sensiblement égal pour tous les noeuds 88.

On obtient ainsi un motif dont on trace ensuite les symétriques par rapport au grand axe, au petit axe et au centre de l'ellipse 47, de sorte à obtenir la grille chauffante 72 complète.

Le dessin est finalement complété avec la couronne de fixation 40 et le support central 64, de sorte à obtenir l'organe de chauffage 30 intégral.

Avantageusement, le dessin de l'organe de chauffage 30 sera ensuite utilisé pour piloter un automate de production de l'organe de chauffage 30.

De retour à la Figure 1, l'alimentation électrique 32 comprend une source 90 d'énergie électrique, constituée par exemple par la batterie électrique du véhicule, ou par un dispositif supercondensateur.

La source d'énergie électrique 90 est typiquement adaptée pour fournir un courant continu ou haché, sous une tension dépendant du véhicule (12, 48 ou 400 volts par exemple).

L'alimentation électrique 32 comprend également un contrôleur 93 agencé pour piloter l'alimentation de l'organe de chauffage 30 en énergie électrique.

Le contrôleur 93 comprend par exemple une unité de traitement de l'information formée d'un processeur et d'une mémoire associée au processeur. En variante, le contrôleur 93 est réalisé sous forme de composants logiques programmables, tels que des FPGA (Field-Programmable Gate Array), ou sous la forme de circuits intégrés dédiés, tels que des ASIC (Application-Specific Integrated Circuit).

Le contrôleur 93 est configuré notamment pour choisir la tension et le courant électrique fournis par l'alimentation électrique 32 à l'organe de chauffage 30, de manière à maintenir la puissance de chauffage et/ou la puissance électrique consommée dans une fourchette déterminée.

Typiquement, le contrôleur 93 contrôle le chauffage par modulation de largeur d'impulsion (PWM, Pulse Width Modulation en anglais).

L'alimentation électrique 32 comporte encore un organe 94 d'acquisition de l'intensité du courant électrique alimentant les éléments chauffants allongés 74 et de la tension électrique aux bornes des éléments chauffants allongés 74.

Cet organe 94 est de tout type adapté.

Par exemple, l'organe d'acquisition 94 comporte un capteur 95 de mesure de courant électrique et un capteur 97 de mesure de la tension électrique. En variante, l'intensité du courant électrique et la tension électrique sont obtenues par calcul, à partir d'information récupérée dans le contrôleur 93.

Le contrôleur 93 est avantageusement configuré pour contrôler la température des éléments chauffants allongés 74, surveiller le bon état de fonctionnement des éléments chauffants allongés 74, déterminer la température des gaz d'échappement lorsque l'organe de chauffage 30 n'est plus utilisé pour chauffer l'organe de purification 10, et déterminer le débit de gaz d'échappement à travers l'organe de purification 10, une fois que l'organe de chauffage 30 n'est plus utilisé pour chauffer l'organe de purification 10. A cet effet, le contrôleur 93 est par exemple configuré pour mettre en oeuvre les programmes de contrôle décrits dans le document FR 3 065 027 A1.

En référence aux Figures 6 et 7, l'organe de chauffage 30 selon le deuxième mode de réalisation de l'invention se distingue de l'organe de chauffage 30 du premier mode de réalisation seulement en ce que le bord interne 46 du cadre périphérique 42 n'est pas ovale mais circulaire.

En conséquence, le contour de la rondelle 66, les contours fermés formés par les brins 82, 83 correspondants des différents éléments chauffants allongés 74, et les lignes d'isopotentiel L, qui sont des homothéties de centre G de ce bord interne 46, se retrouvent tous constitués par des cercles centrés sur le centre géométrique G. De plus, chaque brin 82, 83 de chaque élément chauffant allongé 74 se retrouve constitué par un arc de cercle centré sur le centre géométrique G.

Par ailleurs, l'organe de chauffage 30 selon le deuxième mode de réalisation de l'invention se retrouve ainsi à partager avec l'organe de chauffage 30 du premier mode de réalisation notamment les caractéristiques relatives :

- à l'absence de point angulaire à la jonction entre les brins 82, 83 des différents éléments chauffants allongés 74,
- au rapport entre la longueur l et la section droite minimale S des noeuds 88, et
- au rapport entre l'épaisseur e et la largeur w des brins 82, 83.

L'organe de chauffage 30 de la Figure 7 se distingue de ceux représentés aux Figures précédentes en ce qu'il n'est pas plan. En particulier, le support central 64 est décalé axialement relativement au plan du cadre périphérique 42 de sorte que le support central 64 et le cadre périphérique 42 ne sont pas dans un même plan.

La grille chauffante 72 a alors une forme de dôme dont le sommet est formé par le support central 64 et la base par le cadre périphérique 42. L'organe de chauffage 30 est monté dans l'organe d'alimentation 20 de sorte que la convexité de ce dôme soit orientée vers l'amont, c'est-à-dire de sorte que le support central 64 soit disposé en amont du cadre périphérique 42 relativement au sens de circulation des gaz d'échappement.

Cette configuration permet une meilleure résistance de la grille chauffante 72 aux flux de gaz d'échappement, puisque les efforts appliqués par ces flux sur la grille chauffante se retrouvent ainsi redistribués vers le cadre périphérique 42, et par cet intermédiaire vers l'enveloppe 28. Elle permet également d'absorber une partie de la dilatation thermique due à la montée en température de la grille chauffante 72 en permettant une déformation axiale de la grille chauffante 72 ; ainsi, la déformation radiale est moins importante, ce qui réduit les risques de contact entre les brins 82, 83 et donc les risques de court-circuit.

Une autre différence que présente l'organe de chauffage de la Figure 7 est que les saillies radiales 44 ne sont pas comprises dans le plan du cadre périphérique 42 mais font saillie axialement, dans une direction opposée à celle du support central 64.

Grâce à l'invention décrite ci-dessus, il est ainsi possible d'obtenir un organe de chauffage 30 présentant une bonne tenue mécanique, adapté à tout type de dispositif de purification, y compris à des dispositifs de purification à section ovale, et permettant une relative homogénéité de chauffage dans des conduites présentant de telles sections. De plus, le courant pouvant se répartir de manière homogène au sein de l'organe de chauffage 30, cela évite l'apparition de points chauds qui auraient pour conséquence d'affaiblir localement l'organe de chauffage 30, au point de risquer sa rupture.

En outre, l'organe de chauffage 30 peut être aisément conçu par ordinateur à partir de paramètres prédéterminés, ce qui en fait un élément peu coûteux.

Enfin, il est possible de manipuler aisément l'organe de chauffage 30, en particulier de le transporter sans risque de détérioration et de le monter facilement sur un dispositif de purification des gaz d'échappement existant, sans impact sur l'encombrement de la ligne d'échappement.

## Revendications

1. Organe de chauffage (30) pour un dispositif (9) de purification des gaz d'échappement d'un véhicule, adapté pour être disposé en regard et à distance d'une face amont (12) ou aval (14) d'un organe (10) de purification des gaz d'échappement d'un véhicule, ledit organe de chauffage (30) comprenant un cadre périphérique (42) électriquement conducteur présentant un bord interne (46) ayant un centre géométrique (G), un support central (64) disposé sensiblement au centre géométrique (G), et une grille chauffante (72) ajourée, centrée sur le centre géométrique (G) et s'étendant depuis le support central (64) jusqu'au cadre périphérique (42), ladite grille chauffante (72) étant formée d'une pluralité d'éléments chauffants allongés (74) ayant chacun des première et seconde extrémités (75, 76) opposées l'une à l'autre, la première extrémité (75) étant liée au cadre périphérique (42) et la seconde extrémité (76) étant liée au support central (64), chaque élément chauffant allongé (74) occupant un secteur angulaire (77) respectif de la grille chauffante (72) et étant agencé en zigzag à l'intérieur de ce secteur angulaire (77) de sorte à former une succession de brins (82, 83) raccordés par des noeuds (88) et étant lié par lesdits noeuds (88) aux éléments chauffants allongés (74) occupant les secteurs angulaires (77) voisins, les brins (82, 83) formant des anneaux concentriques centrés sur le centre géométrique G.

2. Organe de chauffage (30) selon la revendication 1, dans lequel chaque brin (82, 83) présente une épaisseur (e), prise parallèlement à la direction de circulation du flux de gaz d'échappement à travers la grille chauffante (72), et une largeur (w), prise perpendiculairement à la direction de circulation du flux de gaz d'échappement à travers la grille chauffante (72) et perpendiculairement à la direction de plus grande dimension dudit brin (82, 83), l'épaisseur (e) étant supérieure à la largeur (w).

3. Organe de chauffage (30) selon la revendication 2, dans lequel le rapport de l'épaisseur (e) sur la largeur (w) est supérieur à 1,5 et de préférence supérieur à 2,0.

4. Organe de chauffage (30) selon l'une quelconque des revendications précédentes, dans lequel chaque brin (82, 83) d'un élément chauffant allongé (74) occupant un secteur angulaire (77) donné est tangent à un brin (82, 83) correspondant de chacun des éléments chauffants allongés (74) occupant les secteurs angulaires (77) voisins.

5. Organe de chauffage (30) selon l'une quelconque des revendications précédentes, dans lequel les noeuds (88) sont agencés sur une pluralité de lignes d'isopotentiel (L) à contour fermé et, pour chaque noeud (88) agencé sur une ligne d'isopotentiel (L), le rapport entre la longueur (l) dudit noeud (88), mesurée entre les brins (82, 83) qu'il raccorde, et la section (S) dudit noeud (88), mesurée perpendiculairement à la longueur (l), est sensiblement égal au rapport entre la longueur (l) et la section (S) de chaque autre noeud (88) agencé sur la même ligne d'isopotentiel (L).

6.  Organe de chauffage (30) selon l'une quelconque des revendications précédentes, dans lequel chaque secteur angulaire (77) de la grille chauffante (72) embrasse une portion du bord interne (46) du cadre périphérique (42) de longueur égale à la longueur du bord interne (46) embrassée par chaque autre secteur angulaire (77).

7.  Organe de chauffage (30) selon l'une quelconque des revendications précédentes, dans lequel le bord interne (46) du cadre périphérique (42) n'est pas circulaire et est de préférence ovale.

8.  Organe de chauffage (30) selon la revendication 7, dans lequel le bord interne (46) du cadre périphérique (42) a sensiblement la forme d'une ellipse (47) centrée sur le centre géométrique (G) ayant un demi grand axe de longueur a et un demi petit axe de longueur b, ledit bord interne (46) étant constitué par la réunion de quatre courbes (48) formées chacune par la réunion de deux arcs de cercle (50, 52) tangents l'un à l'autre, dont :

    - un premier arc de cercle (50) de rayon R1 et centré sur un premier centre ($O_1$) interposé entre le centre géométrique (G) et un sommet ($S_1$) du grand axe de l'ellipse (47) et disposé à la distance R1 dudit sommet ($S_1$), où $R1 = \frac{c^2 - a \times c + b \times c}{2 \times a}$, avec c = $\sqrt{a^2 + b^2}$, et

    - un deuxième arc de cercle (52) de rayon R2 et centré sur un deuxième centre ($O_2$) aligné avec le petit axe de l'ellipse (47) et disposé à la distance R2 d'un sommet (S2) dudit petit axe, où $R2 = \frac{a^3 + a^2 c - a^2 b + ab^2 - b^3 + cb^2}{2bc}$.

9.  Organe de chauffage (30) selon l'une quelconque des revendications précédentes, dans lequel la grille chauffante (72) a une forme de dôme dont le sommet est formé par le support central (64) et la base par le cadre périphérique (42).

10. Organe d'alimentation (20) pour un dispositif (9) de purification des gaz d'échappement d'un véhicule, l'organe d'alimentation (20) comprenant :

    - une alimentation électrique (32),
    - une enveloppe (28) en un matériau électriquement conducteur, ladite enveloppe (28) ayant une face amont (34) par laquelle les gaz d'échappement pénètrent dans l'organe d'alimentation (20) et une face aval (36) par laquelle les gaz d'échappement sortent de l'organe d'alimentation (20), l'enveloppe (28) étant raccordée électriquement à une première borne (33A) de l'alimentation électrique (32) ou à la masse,
    - un organe de chauffage (30) selon l'une quelconque des revendications précédentes, logé dans l'enveloppe (28), en regard de la face aval (36), l'organe de chauffage (30) étant monté dans ladite enveloppe (28) de sorte que le cadre périphérique (42) soit en contact électrique avec l'enveloppe (28), et
    - une électrode (70) raccordant électriquement le support central (64) à une deuxième borne (33A) de ladite alimentation électrique (32), ladite électrode (70) s'étendant à travers l'enveloppe (28) en étant électriquement isolée de ladite enveloppe (28).

11. Organe d'alimentation (20) selon la revendication 10, dans lequel l'organe de chauffage (30) est selon la revendication 9 et est monté dans l'organe d'alimentation (20) de sorte que la convexité du dôme soit orientée vers l'amont.

12. Dispositif (9) de purification des gaz d'échappement d'un moteur à combustion interne comprenant au moins un organe (10) de purification des gaz d'échappement ayant une face amont (12) par laquelle les gaz d'échappement pénètrent dans l'organe de purification (10) et une face aval (14) par laquelle les gaz d'échappement sortent de l'organe de purification (10), le dispositif de purification (9) comprenant en outre au moins un organe d'alimentation (20) selon la revendication 10 ou 11 disposé de sorte à faire sensiblement coïncider la face aval (36) de l'enveloppe (28) dudit organe d'alimentation (20) avec la face amont (12) de l'organe de purification (10).

13. Ligne d'échappement (1) de moteur à combustion interne comprenant au moins un dispositif de purification (9) selon la revendication 12.

14. Véhicule automobile comprenant une ligne d'échappement (1) selon la revendication 13.

**Patentansprüche**

1. Heizelement (30) für eine Abgasreinigungsvorrichtung (9) eines Fahrzeugs, das dafür ausgelegt ist, gegenüber und in einem Abstand zu einer stromaufwärtigen (12) oder stromabwärtigen (14) Seite eines Abgasreinigungselements (10) eines Fahrzeugs angeordnet zu werden, das Heizelement (30) umfassend einen elektrisch leitenden Umfangsrahmen (42), der einen Innenrand (46) mit einem geometrischen Mittelpunkt (G) aufweist, einen zentralen Träger (64), der im Wesentlichen am geometrischen Mittelpunkt (G) angeordnet ist, und ein durchbrochenes Heizgitter (72), das zu dem geometrischen Mittelpunkt (G) zentriert ist und sich von dem zentralen Träger (64) bis zum Umfangsrahmen (42) erstreckt, wobei das Heizgitter (72) aus einer Vielzahl länglicher Heizelemente (74) gebildet ist, von denen jedes ein erstes und ein zweites Ende (75, 76) aufweist, die einander gegenüberliegen, wobei das erste Ende (75) mit dem Umfangsrahmen (42) und das zweite Ende (76) mit dem zentralen Träger (64) verbunden ist, wobei jedes längliche Heizelement (74) einen jeweiligen Winkelsektor (77) des Heizgitters (72) einnimmt und innerhalb dieses Winkelsektors (77) zickzackförmig so angeordnet ist, dass es eine Abfolge von Strängen (82, 83) bildet, die durch Knoten (88) verbunden sind, und durch die Knoten (88) mit den länglichen Heizelementen (74) verbunden ist, die die benachbarten Winkelsektoren (77) einnehmen, wobei die Stränge (82, 83) konzentrische Ringe bilden, die zu dem geometrischen Mittelpunkt G zentriert sind.

2. Heizelement (30) nach Anspruch 1, wobei jeder Strang (82, 83) parallel zu der Strömungsrichtung des Abgasstroms durch das Heizgitter (72) eine Dicke (e) und senkrecht zu der Strömungsrichtung des Abgasstroms durch das Heizgitter (72) und senkrecht zu der Richtung der größten Abmessung des Strangs (82, 83) eine Breite (w) aufweist, wobei die Dicke (e) größer als die Breite (w) ist.

3. Heizelement (30) nach Anspruch 2, wobei das Verhältnis der Dicke (e) zu der Breite (w) größer als 1,5 und vorzugsweise größer als 2,0 ist.

4. Heizelement (30) nach einem der vorstehenden Ansprüche, wobei jeder Strang (82, 83) eines länglichen Heizelements (74), das einen gegebenen Winkelsektor (77) einnimmt, tangential zu einem entsprechenden Strang (82, 83) jedes der länglichen Heizelemente (74) verläuft, die die benachbarten Winkelsektoren (77) einnehmen.

5. Heizelement (30) nach einem der vorstehenden Ansprüche, wobei die Knoten (88) auf einer Vielzahl von Isopotentiallinien (L) mit geschlossener Kontur angeordnet sind und wobei für jeden Knoten (88), der auf einer Isopotentiallinie (L) angeordnet ist, das Verhältnis zwischen der Länge (I) des Knotens (88), die zwischen den Strängen (82, 83), die er verbindet, gemessen wird, und dem Querschnitt (S) des Knotens (88), der senkrecht zu der Länge (I) gemessen wird, im Wesentlichen gleich dem Verhältnis zwischen der Länge (I) und dem Querschnitt (S) jedes anderen Knotens (88) ist, der auf derselben Isopotentiallinie (L) angeordnet ist.

6. Heizelement (30) nach einem der vorstehenden Ansprüche, wobei jeder Winkelsektor (77) des Heizgitters (72) einen Abschnitt des Innenrands (46) des Umfangsrahmens (42) aufspannt, dessen Länge gleich der Länge des Innenrands (46) ist, die von jedem anderen Winkelsektor (77) aufgespannt wird.

7. Heizelement (30) nach einem der vorstehenden Ansprüche, wobei der Innenrand (46) des Umfangsrahmens (42) nicht kreisförmig ist und vorzugsweise oval ist.

8. Heizelement (30) nach Anspruch 7, wobei der Innenrand (46) des Umfangsrahmens (42) im Wesentlichen die Form einer zum dem geometrischen Mittelpunkt (G) zentrierten Ellipse (47) hat, die eine halbe Hauptachse mit der Länge a und eine halbe Nebenachse mit der Länge b aufweist, wobei der Innenrand (46) aus der Vereinigung von vier Kurven (48) besteht, die jeweils durch die Vereinigung von zwei zueinander tangentialen Kreisbögen (50, 52) gebildet werden, bei denen es sich um folgende handelt:

 - ein erster Kreisbogen (50) mit dem Radius R1 und zentriert zu einem ersten Mittelpunkt ($O_1$), der zwischen dem geometrischen Mittelpunkt (G) und einem Scheitelpunkt ($S_1$) der Hauptachse der Ellipse (47) liegt und mit dem Abstand R1 zu dem Scheitelpunkt ($S_1$) angeordnet ist, wobei $R1 = \frac{c^2 - a \times c + b \times c}{2 \times a}$, mit $c = \sqrt{a^2 + b^2}$, und

 - ein zweiter Kreisbogen (52) mit dem Radius R2 und zentriert zu einem zweiten Mittelpunkt ($O_2$), der zu der

Nebenachse der Ellipse (47) ausgerichtet ist und mit dem Abstand R2 zu einem Scheitelpunkt (S$_2$) der Nebenachse angeordnet ist, wobei $R2 = \frac{a^3 + a^2c - a^2b + ab^2 - b^3 + cb^2}{2bc}$ .

9. Heizelement (30) nach einem der vorstehenden Ansprüche, wobei das Heizgitter (72) eine Wölbungsform hat, deren Spitze durch den zentralen Träger (64) und deren Basis durch den Umfangsrahmen (42) gebildet wird.

10. Zuführelement (20) für eine Abgasreinigungsvorrichtung (9) eines Fahrzeugs, wobei das Zuführelement (20) umfasst:

    - eine elektrische Stromversorgung (32),
    - eine Umhüllung (28) aus einem elektrisch leitenden Material, wobei die Umhüllung (28) eine stromaufwärtige Seite (34), über die die Abgase in das Zuführelement (20) eintreten, und eine stromabwärtige Seite (36), über die die Abgase aus dem Zuführelement (20) austreten, aufweist, wobei die Umhüllung (28) elektrisch mit einem ersten Anschluss (33A) der Stromversorgung (32) oder mit Masse verbunden ist,
    - ein Heizelement (30) nach einem der vorstehenden Ansprüche, das in der Umhüllung (28) gegenüber der stromabwärtigen Seite (36) eingebaut ist, wobei das Heizelement (30) so in der Umhüllung (28) angebracht ist, dass der Umfangsrahmen (42) in elektrischem Kontakt zu der Umhüllung (28) steht, und
    - eine Elektrode (70), die den zentralen Träger (64) elektrisch mit einem zweiten Anschluss (33A) der Stromversorgung (32) verbindet, wobei sich die Elektrode (70) durch die Umhüllung (28) erstreckt und dabei elektrisch von der Umhüllung (28) isoliert ist.

11. Zuführelement (20) nach Anspruch 10, wobei das Heizelement (30) Anspruch 9 entspricht und so in dem Zuführelement (20) angebracht ist, dass die Konvexität der Wölbung stromaufwärts ausgerichtet ist.

12. Abgasreinigungsvorrichtung (9) eines Verbrennungsmotors, umfassend mindestens ein Abgasreinigungselement (10) mit einer stromaufwärtigen Seite (12), über die die Abgase in das Reinigungselement (10) eintreten, und einer stromabwärtigen Seite (14), über die die Abgase aus dem Reinigungselement (10) austreten, wobei die Reinigungsvorrichtung (9) ferner mindestens ein Zuführelement (20) nach Anspruch 10 oder 11 umfasst, das so angeordnet ist, dass die stromabwärtige Seite (36) der Umhüllung (28) des Zuführelements (20) im Wesentlichen mit der stromaufwärtigen Seite (12) des Reinigungselements (10) zusammenfällt.

13. Abgasleitung (1) eines Verbrennungsmotors, umfassend mindestens einer Reinigungsvorrichtung (9) nach Anspruch 12.

14. Kraftfahrzeug, umfassend eine Abgasleitung (1) nach Anspruch 13.


**Claims**

1. A heating member (30) for an exhaust gas purification device (9) of a vehicle, adapted to be arranged opposite and at a distance from an upstream (12) or downstream (14) face of an exhaust gas purification member (10) of a vehicle, said heating member (30) comprising an electrically conductive peripheral frame (42) having an inner edge (46) having a geometric center (G), a central support (64) arranged substantially at the geometric center (G), and a perforated heating grid (72), centered on the geometric center (G) and extending from the central support (64) to the peripheral frame (42), said heating grid (72) being formed from a plurality of elongated heating elements (74) each having first and second ends (75, 76) opposite one another, the first end (75) being connected to the peripheral frame (42) and the second end (76) being connected to the central support (64), each elongated heating element (74) occupying a respective angular sector (77) of the heating grid (72) and being arranged in a zigzag pattern within this angular sector (77) so as to form a succession of strands (82, 83) connected by nodes (88) and being linked by said nodes (88) to elongated heating elements (74) occupying adjacent angular sectors (77), the strands (82, 83) forming concentric rings centered on the geometric center G.

2. The heating member (30) according to claim 1, wherein each strand (82, 83) has a thickness (e), taken parallel to the direction of circulation of the exhaust gas flow through the heating grid (72), and a width (w), taken perpendicular to the direction of circulation of the exhaust gas flow through the heating grid (72) and perpendicular to the direction of largest dimension of said strand (82, 83), the thickness (e) being greater than the width (w).

3. The heating member (30) according to claim 2, wherein the ratio of the thickness (e) to the width (w) is greater than 1.5 and preferably greater than 2.0.

4. The heating member (30) according to any one of the preceding claims, wherein each strand (82, 83) of an elongated heating element (74) occupying a given angular sector (77) is tangent to a corresponding strand (82, 83) of each of the elongated heating elements (74) occupying the neighboring angular sectors (77).

5. The heating member (30) according to any one of the preceding claims, wherein the nodes (88) are arranged on a plurality of closed isopotential contour lines (L), and, for each node (88) arranged on an isopotential line (L), the ratio between the length (l) of said node (88), measured between the strands (82, 83) that it connects, and the section (S) of said node (88), measured perpendicular to the length (l), is substantially equal to the ratio between the length (l) and the section (S) of each other node (88) arranged on the same isopotential line (L).

6. The heating member (30) according to any one of the preceding claims, wherein each angular sector (77) of the heating grid (72) encompasses a portion of the inner edge (46) of the peripheral frame (42) of length equal to the length of the inner edge (46) of each other angular sector (77).

7. The heating member (30) according to any one of the preceding claims, wherein the inner edge (46) of the peripheral frame (42) is not circular and is preferably oval.

8. The heating member (30) according to claim 7, wherein the inner edge (46) of the peripheral frame (42) has substantially the shape of an ellipse (47) centered on the geometric center (G) having a semi-major axis with length a and a semi-minor axis with length b, said inner edge (46) consisting of the combination of four curves (48) each formed by the combination of two circular arcs (50, 52) tangent to each other, including:

- a first circular arc (50) of radius R1 and centered on a first center $(O_1)$ interposed between the geometric center (G) and a vertex $(S)_1)$ of the major axis of the ellipse (47) and arranged at the distance R1 from said vertex $(S_1)$, where $R1 = \frac{c^2 - a \times c + b \times c}{2 \times a}$, with $c = \sqrt{a^2 + b^2}$, and

- a second circular arc (52) of radius R2 and centered on a second center $(O_2)$ aligned with the minor axis of the ellipse (47) and arranged at the distance R2 from a vertex $(S_2)$ of said minor axis, wherein $R2 = \frac{a^3 + a^2 c - a^2 b + ab^2 - b^3 + cb^2}{2bc}$.

9. The heating member (30) according to any one of the preceding claims, wherein the heating grid (72) has a dome shape whose apex is formed by the central support (64) and whose base is formed by the peripheral frame (42).

10. A supply member (20) for a device (9) for purifying the exhaust gases of a vehicle, the supply member (20) comprising:

- a power supply (32),
- an envelope (28) made of an electrically conductive material, said envelope (28) having an upstream face (34) through which the exhaust gases enter the supply member (20) and a downstream face (36) through which the exhaust gases leave the supply member (20), the envelope (28) being electrically connected to a first terminal (33A) of the electrical supply (32) or to the ground,
- a heating member (30) according to any one of the preceding claims, housed in the envelope (28), opposite the downstream face (36), the heating member (30) being mounted in said envelope (28) so that the peripheral frame (42) is in electrical contact with the envelope (28), and
- an electrode (70) electrically connecting the central support (64) to a second terminal (33A) of said power supply (32), said electrode (70) extending through the envelope (28) by being electrically isolated from said envelope (28).

11. The supply member (20) according to claim 10, wherein the heating member (30) is according to claim 9 and is mounted in the supply member (20) so that the convexity of the dome is oriented upstream.

12. An exhaust gas purification device (9) for an internal combustion engine comprising at least one exhaust gas purification member (10) having an upstream face (12) through which the exhaust gases enter the purification member (10) and a downstream face (14) through which the exhaust gases exit the purification member (10), the purification device (9) further comprising at least one supply member (20) according to claim 10 or 11 arranged so as to make the downstream face (36) of the envelope (28) of said supply member (20) substantially coincide with the upstream face (12) of the purification member (10).

13. An exhaust line (1) for an internal combustion engine comprising at least one purification device (9) according to claim 12.

14. A motor vehicle comprising an exhaust line (1) according to claim 13.

<u>FIG.1</u>

EP 3 942 165 B1

**FIG.2**

FIG.3

EP 3 942 165 B1

FIG.4

FIG.5

FIG.6

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3065027 A1